# EUROPEAN PATENT APPLICATION

(11) **EP 4 783 436 A1**
(43) Date of publication of application: **29.07.2026**
(21) Application number: 25153664.5
(22) Date of filing: 23.01.2025
(51) Int. Cl.: H02M 1/00, H02M 1/36, H02M 5/12, H02M 7/219, H02M 7/23

(54) **A METHOD FOR OPERATING AN ELECTROLYSIS SYSTEM, RELATED CONTROLLER, POWER SUPPLY AND ELECTROLYZER SYSTEM**

(71) Applicant: Siemens Energy Global GmbH & Co. KG, 81739 München (DE)
(72) Inventor: Craciun, Bogdan, 91052 Erlangen (DE); Czichon, Jens Christian, 59494 Soest (DE); Schumann, Sven, 91452 Wilhermsdorf (DE)

(57) **Abstract**

A method for operating an electrolysis system comprising an electrolyzer (7) and an on-load tap changing transformer (2) is provided. The system further comprises at least two line-commutated converters (3), preferably IGBT converters, wherein the on-load tap changing transformer (2) receives an electrical power (4) from an electrical power source (5) and provides an electrical power output (4) to the line-commutated converters (3), wherein the at least two line-commutated converters (3) are electrically connected in parallel between the on-load tap changing transformer (2) on a AC side and an electrolyzer (7) on a DC side and convert the electrical power output (4) into an electrical power input (6) for the electrolyzer (7), wherein the at least two converters (3) are connected to the same transformer AC bus, the method comprising in a ramping phase of the electrolyzer (7, 100) adjusting a voltage (U_{E}) of the electrical power input (6) by means of only one of the parallelly connected converters (3) to a tap changing voltage (Uₜₐₚ), wherein the other parallelly connected converter is in a stand-by mode. Moreover, a related power supply, a controller, computer program and a related electrolyzer system are provided.

## Description

The present invention relates to a method for operating an electrolyzer system and/or a power supply for an electrolyzer system, preferably an electrolysis plant. Furthermore, a related power supply system, a corresponding controller and an electrolysis system or electrolysis plant are subject to the present invention.

The electrolyzer system preferably comprises a plurality of electrolyzer stacks set up for so-called PEM electrolysis ("Proton Exchange Membrane"). In these techniques, water is split in a catalyst layer, generating hydrogen on the cathode side of each cell. "PEM", also standing for "Polymer Electrolyte Membrane" is gaining ever more importance in the industrial production of green hydrogen from renewable energy, among other things, due to its load-dynamic behaviour and suitability to cope with fluctuating power levels. As compared to e.g. alkaline electrolysis technology, PEM stands out for quite low operational cost and less complex peripheral and balancing systems. Favourably, high current densities and outputs can be achieved with PEM electrolysis even at higher load gradients and high purity of the hydrogen product.

In PEM electrolysis as well as in alkaline electrolysis to which the presented concept may as well be applicable, hydrogen (H₂) is produced electrolytically from water as a feedstock. wherein water is separated into its chemical components, oxygen (O₂) at the anode and hydrogen at the cathode.

Industry-scale hydrogen-producing water electrolysis systems have a high DC current demand of, e.g., 7 to 10 kA. In order to cope with such a high current, special power supply topologies with suitable transformers and converters or rectifiers need to be applied.

Industry-scale electrolysis plants are further required to be operated in a versatile manner to cope with varying loads and also with the ability to support grid functions, thereby as much as possible complying to grid codes imposed by transmission system operators. To this effect, a transient or ramping phase of the operation of the respective electrolyzer system or array poses a particular challenge. Hence, the present invention tackles these challenges and particularly provides for a technical solution, particularly making use of a so-called active front end (AFE), with an active switching functionality, e.g. but not limited to so-called insulated-gate bipolar transistor (IGBT) and an on-load tap changing (OLTC) transformer.

The term "active front end" is an industrial terminology describing the basic power supply or connection topology, e.g. making use of IGBT's. "Active" thereby indicates the character of an active electronic device, whereas "front end" shall denote a front-end connection to the grid.

In the above-described context, the present invention seeks to improve the power supply and electrolyzer operation in terms of a robust, safe and stable operation during a ramping phase and considering that more than one rectifier is connected to a transformers AC bus. The latter configuration will be more and more crucial for the grid integration of large electrolyzer plants implying paralleling several converters to share the power amongst the rectifiers and to enable processing of high power inputs (currents). In other words, the present invention complies with today's (multi-stack) electrolyzer and power supply requirements.

As compared to a thyristor-based power supply, for instance, the use of active front ends particularly usually requires paralleling of more converters to reach the current level of the related electrolyzer system.

Usage of an OLTC system together with the parallel operation of two or more converters might, however, introduce unintended, unexpected, or abnormal states in the power supply architecture since the OLTC system on the transformer is affecting the quality of the AC (bus) voltage and modifying it into the direction needed by the 'state machine' of the power supply during the ramping phase. This technical difficulty arises newly and will gain even more importance in the future, when a robust power supply and grid connection of electrolyzer plants is likely to occur and needed for the energy transition to be managed at large scale.

It is an object of the present invention to provide means that help to improve the outlined problems of encountering an unstable power supply or related state management. More particularly, the present application targets an improved operation and robust state management of the power supply during ramping such that the entire power supply of the electrolysis avoids entering into an unstable situation.

The mentioned object is achieved by the subject-matters of the independent claims. Advantageous embodiments are subject-matter of the dependent claims.

An aspect of the present invention relates to a method for operating an electrolysis system comprising an electrolyzer and an on-load tap changing transformer which is preferably a medium to low voltage transformer, suitable to transform the medium voltage from a transmission grid or transmission power supply towards a low voltage output.

The electrolysis system which is also aimed at by the present invention directly, preferably comprises at least two line-commutated or self-commutated converters, which are preferably IGBT converters. Expediently the on-load tap changing transformer receives an electrical power from an electrical power source, such as utility network or island grid and provides a related (transformed) electrical power output to the line-commutated converter(s).

The at least two converters are expediently further electrically connected in parallel between the on-load tap changing transformer on an AC side and an electrolyzer or preferably a multi-stack electrolyzer array on the DC side of the converter. The converters are set up and operated to convert the electrical power output into an electrical power input for the electrolyzer, wherein the at least two converters are connected to the same transformer (low-voltage) AC bus or electrical connection.

The method comprises in a transient or ramping phase of the electrolyzer system adjusting a voltage of the electrical power input by means of only one of the parallelly connected converters to a tap changing voltage, like a first tap changing voltage. The other parallelly connected converters (of a given AC bus) are in a standby or idle mode, thereby not processing any electrical power in this instant.

The (first) tap changing voltage is particularly higher than or equal to a minimum operating voltage of the electrolyzer or electrolyzer array.

Use of IGBTs as rectifiers provides the particular advantage of introducing a self-commutated functionality for the rectification of the electrolyzer power. While these devices are not equally capable of carrying high current as compared to e.g. a thyristor topology, capacity to carry high currents is fairly high. At the same time, emission of harmonics is reliably and significantly reduced as compared to thyristor rectifier devices. Still, IGBTs might admit harmonics to a certain extent and depending on the operational mode. These are, however, largely managed by an "in-built" filter design and practically no external filter compensation devices are needed to the benefit of a cost efficient and handy power supply.

Still further, the related line-commutated converters excel in an efficient control with almost no power losses. IGBTs further advantageously allow to process electrical power in both directions, i.e. as a supply towards a DC device but as well in the opposite direction, e.g. including current conversion and/or grid support. Additionally or alternatively, reactive power might be processed as an inherent capability of ITBTs.

In combination with the functionality of an on-load tap changing transformer, footprint of the power supply for an electrolyzer plant at a multidigit megawatt (MW) scale can advantageously be reduced to a desirable minimum. Such transformer types apparently allow to reduce transformer equipment and likewise help to define a safe and reliable operating range according to an "IV" or current-voltage characteristic of the related electrolyzer array. The OLTC particularly allows to adapt the operating voltage of the electrolyzer considering an aging or wearing status of the device "on-load". The introduced topology even allows to adapt load or voltage of the stacks to an ambient temperature in a very easy and effective way. In other words, the provided means allow to supply electrical power for a plurality of electrolyzer stacks at their favorable characteristics even considering of whether the respective device is taken at the beginning of life (BOL) or end of life (EOL). Also, operation remains similarly stable and predictable (no correction or change of the supply setup needed) for different electrolyzer states, such as a hot, warm, or cold (ambient) temperature state.

A main merit of the invention is, thus, basically to significantly improve ramping, dynamic operation, footprint and controls of large electrolyzer systems, thereby coping with related aging and diverging current voltage characteristics.

Finally, a ramping or transient behavior of the stacks may be rendered robust without significantly attaining unstable states in the power supply controls.

The robust and versatile operation of the electrolyzer, particularly during ramp-up or ramp-down, in turn improves the reliance of the whole plant, and reduces servicing, repair and overhaul efforts over the lifetime of the devices. This is an important feature gaining ever more importance in the ambitious targets of synthesizing green hydrogen in autarkic applications self-sufficiently, like onshore.

The mentioned "ramping phase" of the electrolyzer might particularly relates to a transient behavior, like a ramping up or a ramping down to or from a related "normal" operation. This ramping phase preferably extends between a polarization voltage, representing solely a basic charging state of the electrolyzer membranes, and its minimum operating voltage.

The minimum operating voltage confines preferably an operating range of the electrolyzer's current-voltage characteristics at a lower boundary. Evidently, the polarization voltage is defined to be even lower than the minimum operating voltage of the electrolyzer. During this ramping or ramping up phase, voltage of the input of the electrolyzer is preferably adjusted by the active converter device.

In an embodiment, the method comprises changing a tap selection of the on-load tap changing transformer to a first operating tap when the tap changing voltage is reached or exceeded, wherein the tap changing voltage is higher than said minimum operating voltage. Said tap changing voltage may be a first tap changing voltage. During ramp up before reaching the tap changing voltage, the on-load tap changing transformer may be in an initial tap position, preferably not representing an operational tap.

"Reaching" of the tap changing voltage may describe the situation that the voltage of the power input is adjusted to set tap changing voltage accordingly. The outlined functionality does in conjunction with the above-described advantages allow for an easy adaption of the electrolyzer load or voltage in general.

The method further comprises altering the tap selection, particularly to a second operating tap being preferably different from, particularly higher than, the first operating tap e.g. in accordance with an aging parameter of the electrolyzer array. The second operating tap is expediently selected at a second tap changing voltage. That is to say, there may be plenty of tap positions and operating voltages which might be attained by the system into which voltage may be adjusted depending on the overall set up and the desired operating point.

In an advantages embodiment of the method, the self-commutated converters particularly adjust the voltage of the electrical power input corresponding to a related current-voltage characteristic of the electrolyzer array or row of electrolyzer stacks. The voltage is particularly adjusted between the polarization voltage and the (first and/or second) tap changing voltage and/or between the tap changing voltage and a rated operating voltage, for instance.

On the other hand, the method comprises - in a normal operation phase or rated operating range of the electrolyzer - adjusting the voltage of the electrical power input by means of the self-commutated converter between the (first) tap changing voltage and a rated operating voltage of the electrolyzer, wherein the rated operating voltage is higher than the tap changing voltage. The normal operation mode may be attained by the system when an initial ramp-up is finalized.

During the normal operation phase of the electrolyzer, the voltage of the electrical power input is adjusted by means of both of the at least two parallelly connected converters of a given transformer AC bus. This apparently enables sharing of power between the converters during the normal operation mode which is enabled preferably after the (first) tap has been selected or, in other words, the normal operation has been initiated.

Consequently, the stable (normal) operational range is provided, wherein power can advantageously be shared amongst the converter devices to the benefit of a high power input.

The feature of having only one or only one branch of converters processing the power during ramp-up as mentioned avoids introducing unstable operational states and facilitates state management in the power supply.

During the ramp-up phase of the electrolyzer, the method may in turn comprise processing or exchanging reactive power between the electrical power source or grid in the at least two self-commutated converters, or vice versa. According to this embodiment the inherent capability of the (IGBT) converters to process reactive power, such as when required by transmission grid operators, is advantageously provided. E.g., reactive power may be requested by the overall controller or grid operation facility. During ramping up and down of the power supply, specific grid (support) functions could be enabled as well without interfering with the provided power supply controls. Based on the status of the converter loading, individual grid support functions can further be enabled or disabled.

Another aspect of the present invention relates to a computer program or a computer program comprising instructions which, when the program is executed by a controller, particularly by an electrolyzer controller and/or a converter controller and/or a tap changer controller, cause the controller to carry out the steps of the method.

A further aspect of the present invention relates to a computer-readable storage medium having stored thereon the computer program. The computer-readable storage medium may be a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

Moreover, the invention relates to the controller, particularly an electrolyzer controller and/or a converter controller and/or a tap changer controller, comprising a computer-readable storage medium having stored thereon, the computer program and optionally means to execute the method. The controller may be programmable logic controller (PLC). The controller may comprise at least one processor and said computer-readable storage medium, wherein the computer-readable storage medium comprises said computer program which, when executed by the at least one processor, cause the controller to perform the method as described above.

In other words, the at least one processor may be a microprocessor and/or a microcontroller and/or a FPGA (Field Programmable Gate Array) and/or a DSP (Digital Signal Processor).

The controller may comprise means to execute said method, particularly means to convert an alternating current (AC) electrical power output from an electrical power source into a direct current (DC) electrical power input for an electrolyzer and/or comprise means to drop and/or boost a voltage of the electrical power input to the electrolyzer.

Additionally or alternatively, the controller may comprise means to switch a tap of the on-load tap changing transformer and/or means to display when a tap selection is to be changed and/or which tap is to be selected for a manual operation of the on-load tap changing transformer. Moreover, the controller may comprise means to activate or start power processing of one or several of the mentioned converters selectively.

Yet another aspect of the invention relates to the power supply system for a multi-stack electrolysis system comprising the controller, being particularly suitable and adapted to perform the described method.

Therefore, the power supply system expediently comprises an on-load tap changing transformer, particularly a medium to low voltage transformer, and the at least two line-commutated converters, preferably IGBT converters, wherein the on-load tap changing transformer receives an electrical power from the electrical power source and provides an electrical power output to the line-commutated converters. The at least two line-commutated converters are electrically connected in parallel to the on-load tap changing transformer on an AC side and suitable to convert the electrical power output into an electrical power input for an electrolyzer. As describes above, the at least two converters are connected to the same transformer AC bus.

Likewise, the electrolysis system forms part of the present invention, comprising a plurality of electrolyzer stacks, the outlined controller and/or the power supply system.

The invention also relates to realizations comprising a combination of the features of several of the described embodiments.

Advantages and embodiments relating to the described method and/or the described control or computer program are valid or pertain likewise to the power supply and/or the electrolysis system as described.

Further, features and advantageous embodiments become apparent from the following description of the exemplary embodiment in connection with the Figures.
Figure 1 indicates a schematic view of an electrolysis system which is connected to an electrical power source via a power supply.
Figure 2 schematically shows a typical current-voltage characteristic according to which an electrolyzer is operated.
Figure 3 schematically indicates an inventive electrolyzer system comprising a power supply with a plurality of converters connected to the same transformer AC bus.
Figures 4 and 5 schematically show a connection diagram of an electrolyzer system similar to Figure 1, together with a related controller topology according to different embodiments of the present invention.

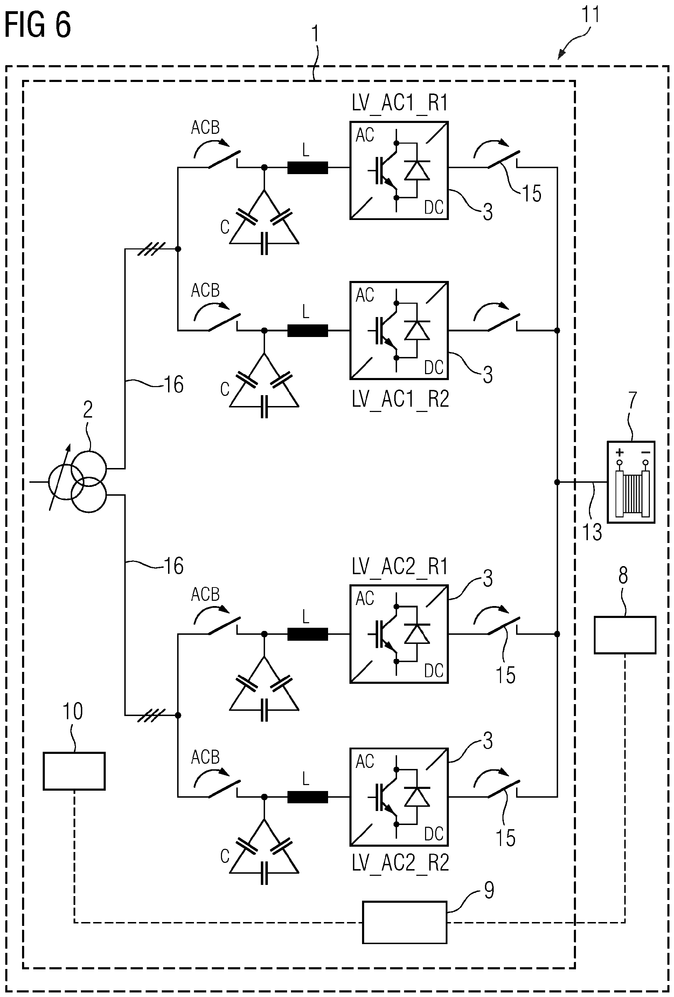

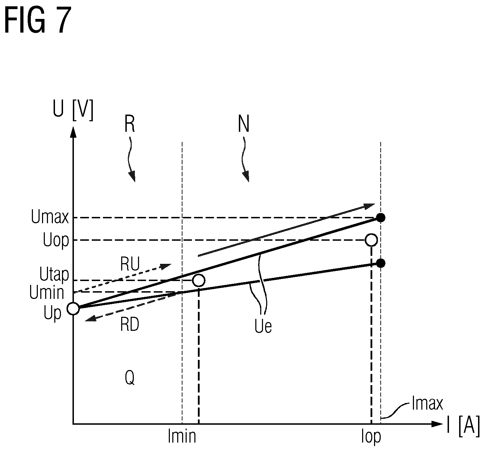

While Figure 7 schematically shows an electrolyzer current-voltage characteristic exemplifying different aspects in the operation of the electrolyzer during ramping and in a normal operation phase, Figures 6, 8, 9, and 10 illustrate different procedural aspects and processing schemes of electrical power for the electrolyzer supply during ramping and a normal operation according to the present invention.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

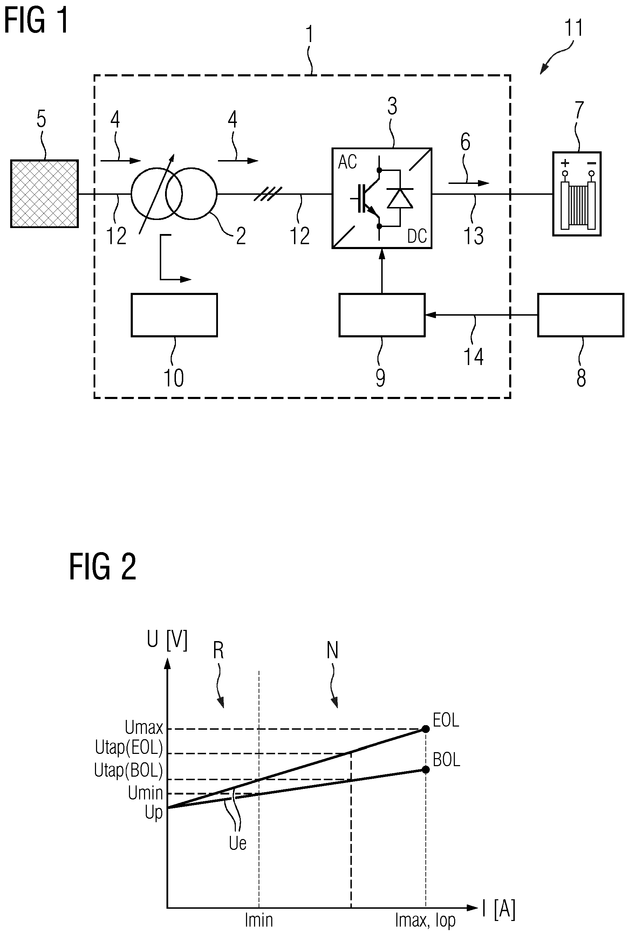

Figure 1 schematically shows an electrolysis system 11 comprising an electrolyzer 7 and an electrolyzer or power supply system 1, wherein the electrolyzer supply system 1, particularly the transformer 2, is connected to an electrical power source 5 via an alternating current electrical connection 12. The transformer tool could be a two-winding transformer (as shown) or, alternatively at three-winding transformer.

The electrical power source 5 may be at least one generator of a power plant or an electrical power station, particularly a renewable power plant, or an electrical grid. The electrical grid may comprise at least one transmission line between the electrical power source and the electrolyzer power supply system an island operation mode or a plurality there of in a network operation mode. The source or grid may provide their electrical power output to the transformer 2 of the electrolyzer power supply system 1 via the alternating current electrical connection 12, particularly at medium voltage level. The alternating current electrical connection 12 may thus comprise additional transformers, particularly from high-voltage to medium-voltage level which are not shown.

The transformer 2 is an on-load tap changing transformer 2 which is electrically connected to the self-commutated converter 3 by means of the alternating current electrical connection 12, particularly at low voltage level. The on-load tap changing transformer 2 is adapted to increase the voltage of the electrical power output 4 from the electrical power source 5 on a converter side of the on-load tap changing transformer 2 where the on-load tap changing transformer 2 is electrically connected to the converter by changing a tap selection of the on-load tap changer. The tap changer of the on-load tap changing transformer 2 is adapted to change, e.g., from an initial position to a (first or second) operating tap or tap position, wherein the on-load tap changing transformer 2 is preferably adapted to provide a higher voltage of the electrical power output 4 to the converter 3 when the first or second tap is selected than when the initial tap selected.

Here, the first tap may correspond to an elevated voltage level of the electrical power output 4 provided to the converter 3 preferably corresponding to level of normal electrolyzer operation as outlined in the following.

The converter 3 is a self-commutated converter 3 which converts the alternating voltage of the electrical power output provided by the transformer 2 to the converter 3 into a direct voltage of electrical power input 6 for the electrolyzer 7.

The term "electrolyzer" shall preferably stand for a system of a plurality of electrolyzer stacks, such as a plurality of rows of electrolyzer stacks (connected in series) according to which a high electrical power input of renewable energy may be processed and expediently transferred into high throughput of an energy carrier, like green hydrogen for example. To this effect the electrolyzer 7 transforms the electrical power input 6 received from the converter 3 into hydrogen by means of the electrolysis process. Preferably the electrolyzer system is an industrial PEM system or PEM electrolysis plant set up to take up electrical power on the multi-megawatt (MW) scale.

The converter 3 may be adapted to boost and/or drop the voltage of the electrical power input 6 of the electrolyzer 7, particularly between a polarization voltage Uₑ and a tap changing voltage Uₜₐₚ of the electrolyzer 7 and/or between the tap changing voltage Uₜₐₚ and a rated operating voltage Uₒₚ of the electrolyzer 7 (see further below).

The term "between" as used herein may mean "higher than" or "lower than" and/or "equal to".

In particular, the converter 3 is adapted to adjust the voltage of the electrical power input 6 within a ramping-up and/or ramping-down limit of the electrolyzer 7. To perform these operations, the self-commutated converter 3 may be an insulated gate bipolar (IGBT) type converter.

The on-load tap changing transformer 2 switches the selected tap when the converter 3 adjusts the voltage of the electrical power input 6 to the tap changing voltage Uₜₐₚ of the electrolyzer 7, which is higher than or equal to a minimum operating voltage Uₘᵢₙ of the electrolyzer 7. Here, the polarization voltage U_{P}, the tap changing voltage Uₜₐₚ and/or the minimum operating voltage Uₘᵢₙ and/or the maximum operating voltage Uₘₐₓ may depend on and relate to an individual or respective type of electrolyzer 7.

The electrolysis system 11 comprises an electrolyzer controller 8 which may be connected to the converter controller 9 and/or optionally to a tap changer controller 10.

The present application predominantly addresses the ramping phase and operation of an electrolyzer having an active front end (AFE) voltage or current source inverter as outlined with active switches e.g. comprising but not limited to integrated gate bipolar transistor (IGBT)) and an on-load tap changing (OLTC) transformer as described.

Figure 2 schematically shows a method for operating the electrolyzer 7 by means of the electrolyzer power supply system 1 according to a simplified current-voltage characteristic of the electrolyzer 7.

The current-voltage characteristic of the electrolyzer 7 is depicted as a current-voltage curve (I-U-curve), wherein the voltage Uₑ of the electrical power input is adjusted by the converter 3 corresponding to the current-voltage characteristic. The electrolyzer 7 has got a polarization voltage U_{P} where no electrolysis reaction may occur. The electrolyzer 7 performs the electrolysis process between the minimum operating voltage Uₘᵢₙ and the maximum operating voltage Uₘₐₓ at their respective corresponding minimum operating current Iₘᵢₙ and maximum operating current Iₘₐₓ.

A normal operating range (indicated with reference N) of the related electrolyzer or electrolyzer system 7 is preferably defined between the minimum current Iₘᵢₙ and the maximum current Iₘₐₓ and between a voltage ranging from the minimum operating voltage Uₘᵢₙ to the maximum operating voltage Uₘₐₓ namely in the limits between the linear slope at begin of life (BOL) (below) and the upper linear slope at end of life (EOL) .

The tap changing voltage Uₜₐₚ is higher than or equal to the minimum operating voltage Uₘᵢₙ and may indicate an operating point or range of the electrolyzer 7, wherein any further change of the tap selection of the on-load tap changing transformer preferably remains within a normal operating range and/or within a ramp-up and/or ramp-down limit of the electrolyzer 7. Increasing the voltage by means of changing tap selection of the on-load tap changing transformer may further advantageously reduce the current and/or a current harmonics feedback.

Before the electrolyzer 7 attains a normal operation status, it needs to be ramped-up in a procedure, wherein the inventive power supply means are applied. The ramping phase could be a ramping up or a ramping down or any other transient phase. However, the ramping phase preferably occurs between the polarization voltage U_{P} and a lowest minimum operating voltage Uₘᵢₙ.

The line in the U-I-diagram (also "IV-diagram") of Figure 2 indicates the voltage Uₑ of the electrical power input 6 provided by the converter 3 to the electrolyzer 7 which is adjusted by means of the converter 3 and/or the on-load tap changing transformer 2 between the polarization voltage U_{P} and the maximum operating voltage Uₘₐₓ according to a ramp-up procedure R and a normal operation phase N of the electrolyzer 7.

During ramp-up, for instance, the voltage of the electrical power output 4 provided by the on-load tap changing transformer 2 to the converter may be the smallest voltage among the voltages of the electrical power output the on-load tap changing transformer is adapted to provide to the converter 3.

The polarization voltage U_{P} corresponds to a voltage level of the electrolyzer 7 where the anode and cathode may receive a polarization where the electrolysis process does not commence yet. The minimum operating voltage Uₘᵢₙ and maximum operating voltage Uₘₐₓ may denote an operation interval of the electrolyzer 7, where the electrolysis process takes place. The operating voltage Uₒₚ is thus between the minimum operating voltage Uₘᵢₙ and the maximum operating voltage Uₘₐₓ(cf. as well Figure 7).

The converter 3 adjusts, particularly boosts, the voltage Uₑ of the electrical power input 6, which is provided to the electrolyzer 7 by the converter 3, from the polarization voltage U_{P} until it reaches e.g. the indicated tap changing voltage Uₜₐₚ. The tap changing voltage Uₜₐₚ is higher than or equal to a minimum operating voltage Uₘᵢₙ of the electrolyzer 7 and may indicate a voltage level of the electrolyzer 7 which allows a change of the tap selection of the on-load tap changing transformer 2. The minimum operating voltage should be determined based on the minimum electrolyzer load, electrolyzer behavior, or other internal considerations.

Consequently, during the transient ramp-up R, the tap of the on-load tap changing transformer 2 is not changed.

Once the voltage Uₑ of the electrical power input 6 provided by the converter 3 to the electrolyzer 7 has reached the tap changing voltage Uₜₐₚ, the tap selection of the on-load tap changing transformer 2 is changed, wherein a first operating tap of the on-load tap changing transformer 2 is selected.

For the described controls, the electrolyzer controller 8 and/or the converter controller 9 may output a signal via the data connection 14 to change or select the (first) tap accordingly. The signal may be a command for the tap changer controller 10 and/or a notification for performing a manual tap selection operation of the on-load tap changing transformer 2.

Additionally, during the change of the tap selection, the converter 3 may continue or maintain its operation of providing the tap changing voltage Uₜₐₚ.

Additionally, the change of the tap selection may be altered based on an aging parameter of the electrolyzer 7. Particularly, the above-indicated operating range according to the current-voltage characteristics allows compensating of an aging effect of the electrolyzer 7 by adjusting the voltage via one or several of further tap positions. Due to an aging of the electrolyzer 7, the current-voltage characteristic of the electrolyzer 7 may particularly change or shift as indicated in the diagram of Figure 2.

In this sense, advantageously, the power supply and operational electrolyzer control is rendered robust and safe even under varying operational states and conditions in the outlined limits and/or according to the related characteristic.

Once the first operating tap has been selected, the converter adjusts, particularly boosts or drops, the voltage Uₑ of the electrical power input 6 to a rated operating voltage Uₒₚ of the electrolyzer 7, wherein the rated operating voltage Uₜₒₚ may be between the tap changing voltage Uₜₐₚ and the maximum operating voltage Uₘₐₓ. This may pertain to a beginning of life situation of the electrolyzer or electrolyzer array and likewise to the respective end-of-life situation (cf. upper straight in the diagram).

A similar process as described for a ramping up here with may be applied for a ramping down, wherein the controls and the process steps are carried out in reverse.

Compared with thyristor-based power supplies for electrolyzer systems, AFE-based supplies require paralleling of multiple converters in order to reach the high current level aimed at for electrolysis system. This means that at a certain point the AFE needs to be paralleled. The parallel operation is achieved today usually in a simple transformer configuration such as two-winding transformer where the converters are connected to the same AC bus. Decoupling of the converters is required and solved via separate elements.

Using an OLTC system together with the parallel operation of two or more converters might, however, have the potential to introduce some unintended or abnormal states since the OLTC system on the transformer is affecting the quality of the AC bus voltage modifying it into the direction needed by the state machine of the power supply during the ramping phase (up of down).

Therefore, the present application targets the operation and state machine of the power supply during ramping with the aim of the entire power supply of the electrolysis to avoid such an unstable situation. In other words, the application aims at and improves the state machine of the power supply in the context of a parallel operation of the at least two converters 3.

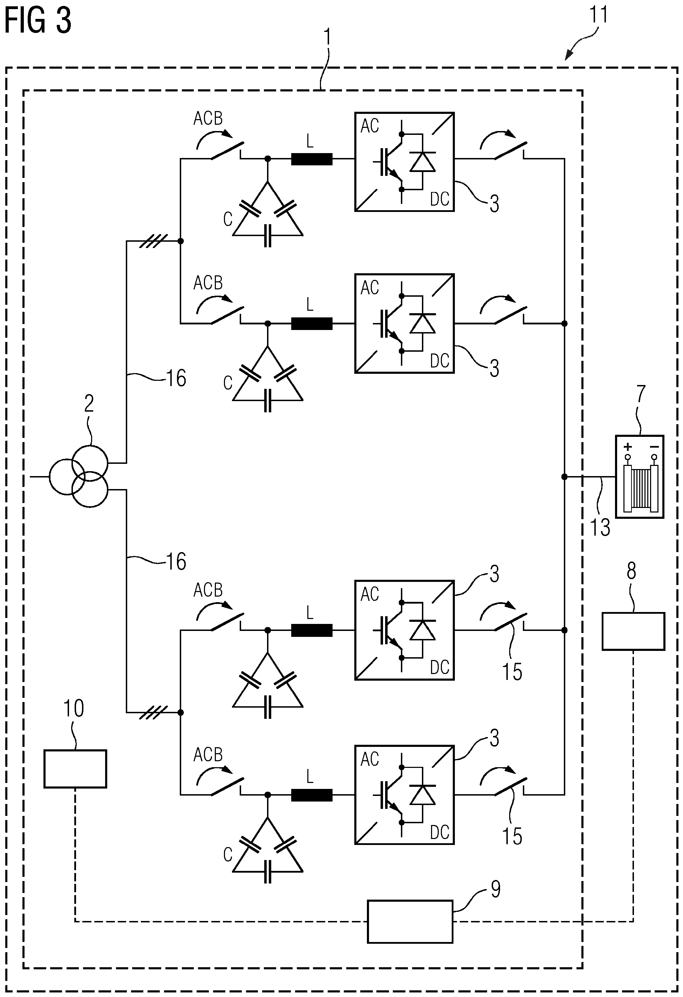

Such a situation is shown by the circuit diagram as shown in Figure 3 for instance. Here, instead of a two-winding transformer, a three-winding transformer is applied, wherein each of the two indicated secondary windings (right side), an AC Bus or electrical connections 16 is shown. To each of the AC bus connections 16, at least two self-commutating or line-commutating converters 3, preferably IGBT converters, are connected in parallel between the on-load tab changing transformer 2 on AC side and the electrolyzer or electrolyzer stack 7 on the DC side. Each of the four indicated branches (not explicitly indicated here) through which preferably the same or a similar current flow, may be controlled or secured via an automatic circuit breaker ACB which may interrupt the related electrical circuit when a short circuit or overload occurs as a result of an excessively high current in the system.

Further, an inductance L and/or a capacitance C or a related (built-in) filtering functionality may be employed. It is also shown in Figure 3 that all DC terminals of the converters lead to a joint DC bus 13 for the electrolyzer or the electrolyzer system 7. Furthermore, a DC switch or connector 15 is shown for each of the indicated branches with which electrical connection can be either established or interrupted selectively.

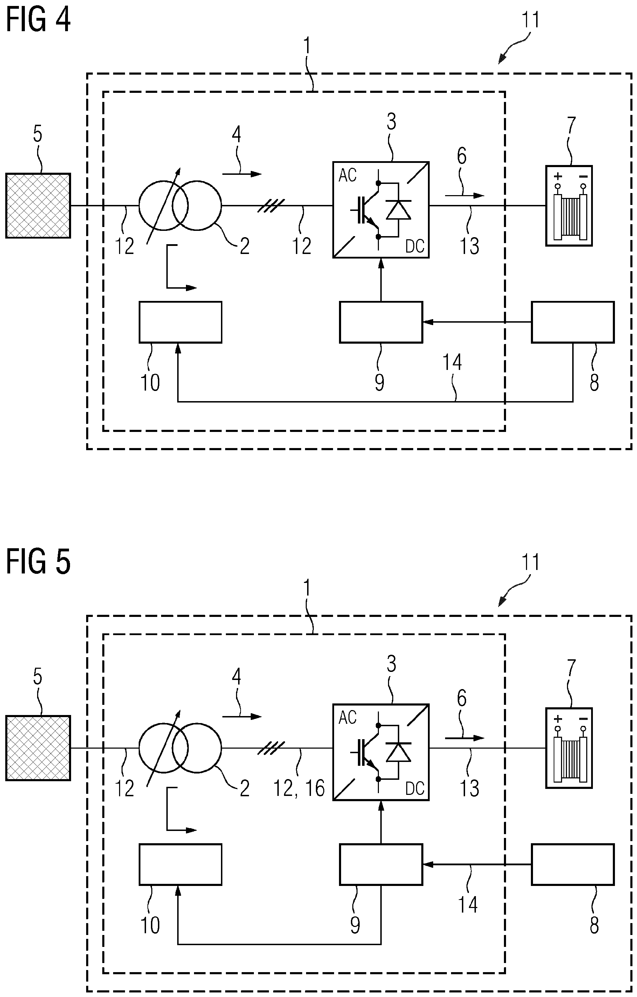

Figures 4 and 5 indicate two feasible embodiments of the electrolysis system 11 specifically in terms of the related control topology of the power supply. The electrolysis system 11 comprises an electrolyzer controller 8 which may be connected to the converter controller 9 and/or optionally to the tap changer controller 10.

According to Figure 4, the electrolyzer controller 8 may control the converter controller 9 for adjusting the voltage Uₑ of the electrical power input 6 and (optionally) the tap changer controller 10 for controlling a tap selection of the on-load tap changing transformer 2. For instance, the on-load tap changing transformer 2 may be operated automatically or embedded in the overall control functionality, or, alternatively, the controller 10 may be operated manually.

Alternatively, as indicated in Figure 5, the converter controller 9 may control the tap changer controller 10 for controlling the tap selection of the on-load tap changing transformer 10. Here, the electrolyzer controller 8 is anyway linked to the converter controller 9 via the data connection 14.

Alternatively, the electrolyzer controller 8 and/or the converter controller 9 may e.g. output a signal indicating when the tap selection is to be changed and/or which tap is to be selected for a manual operation of the on-load tap changing transformer 2.

The overall control structure and control commands could be done independently by the electrolyzer controller 8 (shown in Figure 4) or the electrolyzer controller 8 gives the command to the converter controller 9 to control the OLTC system of the transformer 2 (shown in Figure 5).

The configuration of the system 1, 11 of Figure 6 shows a three-winding transformer having connected two converters on the same transformer or low-voltage (LV) AC electrical connection bus.

Like in cases of all figures, the indicated schematics shall rather indicate example embodiments, wherein the configuration is not limited to the scheme but there can e.g. be further branches with further converters connected in parallel to a given transformer AC terminal.

In order to indicate an aspect of the present invention, Figure 6 shows similarly to Figure 3, the two AC bus connections 16 connecting one of the secondary windings from the on-load tap changing transformer 2 to with a branch of two IGBT converters are connected in parallel, respectively. An upper path of two parallelly connected converters 3 comprising the branch LV AC1 R1 and LV AC1 R2 is shown particularly in the upper part of the picture.

Similarly, another branch of the two paralleled converters 3 is shown at the bottom of the circuit diagram of Figure 6 connected to the lower of both of the transformer AC buses 16. Here the branches LV AC2 R1 and LV AC2 R2 are indicated.

During the ramping procedure, as will further be illustrated by Figures 7, 8 and 9 below, the inventive method comprises in a (transient) phase of the electrolyzer system adjusting a voltage of the electrical power input 6 by means of only one of the parallelly connected converters to the tap changing voltage, wherein the other parallelly connected converter per given AC bus is in a standby mode preferably not processing any electrical power during this phase.

Figure 7 particularly shows by way of a qualitative current-voltage characteristic the voltage U plotted against the current I. At first, the diagram shows from left to right a ramping up behaviour of the electrolyzer system 11. The power supply system 1 needs to start essentially from the level of the polarization voltage U_{P} (cf. filled circle on the left).

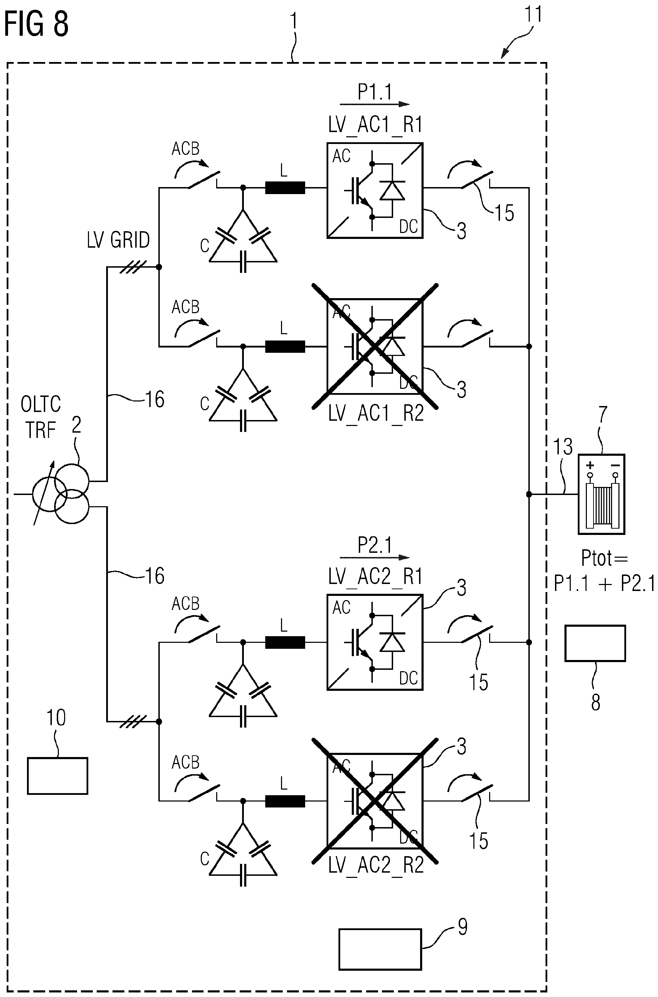

The OLTC tab changing transformer 2 may, hence, be in a minimal operating state. The rectifier, particularly IGBT converter system 3, may operate according to a ramp-up RU until power of the system 11 reaches a minimum operating point above the minimum electrolyzer loading or minimum electrolyzer current Iₘᵢₙ at a minimum operating voltage Uₘᵢₙ being higher than the polarization voltage U_{P}. During this ramp-up or transient phase R the indicated IGBT converter system operates via a modulation of the branches LV AC1 R1 and LV AC2 R1 only, meaning with reference to Figure 8 that only one of the parallelly connected converters of a given AC bus adjusts the voltage of the electrical power input towards a tap changing voltage Uₜₐₚ (cf. filled circle in the middle). The other converters 3 are in an idle or standby mode.

The situation is further described by way of Figure 8 (cf. below) which shows that in this instant only an electrical power indicated with P1.1 in the upper branch and P2.1 of the lower branch are processed. Hence, the total power supplied to the electrolyzer DC terminal is Ptot = P1.1 + P2.1.

As outlined above, when the tap changing voltage is reached, the OLTC transformer preferably adjusts the tap position towards the (first) operating tap.

The normal operation N of the electrolyzer system 11 extends between the tap changing voltage Uₜₐₚ (cf. the minimum electrolyzer current Iₘᵢₙ) and a rated operating voltage Uₒₚ of the electrolyzer, preferably being higher than the tap changing voltage Uₜₐₚ.

In other words, the IGBT operation of the converters reaches a minimum electrolyzer loading when exceeding the minimum current Iₘᵢₙ. Then, the system preferably waits for the OLTC operation which then adjusts the necessary steps, like changing the tap selection towards the first operating tap.

From this point in time (i.e. the normal operation N) onwards, according to the invention, a parallel operation of also the rectifier branches LV AC1 R2 and LV AC2 R2 (in addition to LV AC1 R1 and LV AC2 R1) are initiated or started.

With reference to Figure 8, a first step or phase of the present inventive method may be described following in other words. The OLTC system is in an initial tap position giving the minimum AC voltage level Uₘᵢₙ to the AC bus 16 to which the related converter 3 is connected. This position will stay fixed for the rest of the operation of the power supply during the ramp up RU and/or ramp down RD. After successful start-up and pre-charging of the converters 3 and electrolyzer DC bus 13 with the minimum polarization voltage U_{P} only one IGBT converter per AC winding is enabled for modulation; meaning only one of the parallelly connected converters of a given branch is processing power (P1.1 and P2.1). The other converters of a given branch are in a stand-by mode.

Electrical power is actually processed only by the enabled converters in a 'quasi-unparallel' mode on the same AC bus. The mentioned two converters might at best be considered as operating in a parallel mode but seen from the perspective of the DC side of the circuit only.

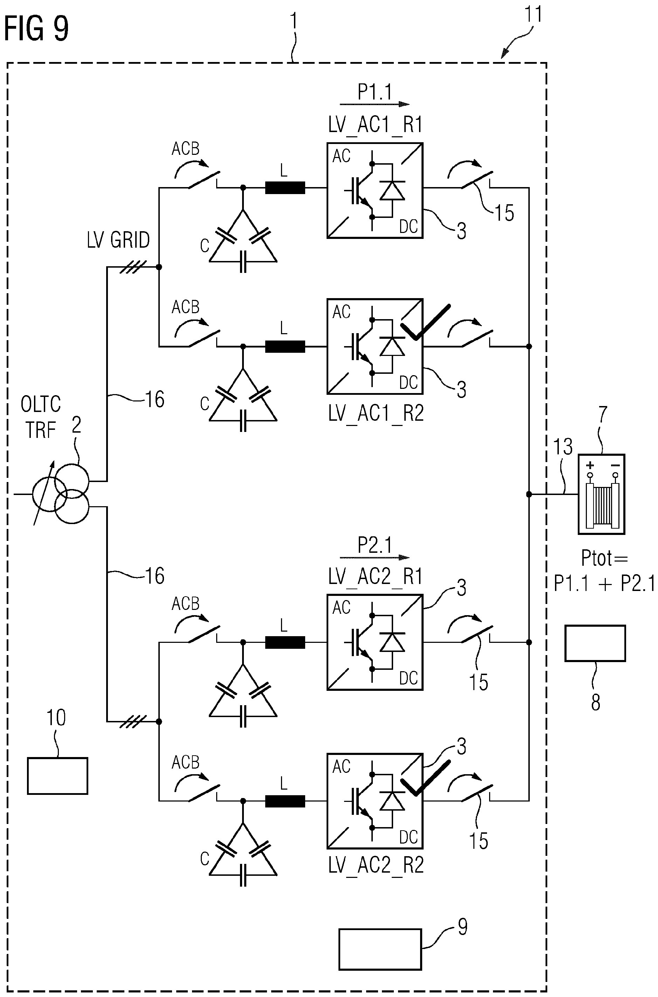

Figure 9 indicates a situation, wherein yet only an electrical power of Ptot = P1.1 + P2.1 is processed by the converters (LV AC1 R1 and LV AC2 R1) since a parallel operation of the two further converters (LV AC1 R2 and LV AC2 R2) is only starting. To this effect, one aspect of said normal operation N may still hold as a sort of `ramping' at least with regards to the branches (LV AC1 R2 and LV AC2 R2). In this sense, normal operation N shall be defined by a mode in which none of the converters 3 is yet in a standby mode (cf. Figure 7) but power processing has at least started.

With reference to Figure 9, a second step or phase of the present inventive method may be described following in other words. Operation of the active front and or converter system power input are supplied to the electrolyzers 7 reaches the minimum electrolyzer loading current. This means that Ptot = Pmin electrolyzer loading. The AFE converters will stay in this operating point from the DC side perspective. Then the OLTC transformer system adjusts the voltage until the needed minimum AC voltage needed for a safe operation of the electrolyzer IV curve is reached. Now the OLTC operation is finished and parallel operation of the AFE converters on the same AC bus starts.

In the normal operating range N, the OLTC is preferably in a fixed position between the minimum loading (current Iₘᵢₙ) and a rated electrolyzer loading I_{OP}. The rated electrolyzer loading or rated operating current I_{OP} corresponds to a voltage level of U_{OP} according to the current-voltage characteristic (cf. filled circle on the right in the diagram of Figure 7). During this stage or at this point electrolyzer system operation is defined between a minimum loading and rated loading including the IGBT operation and finally a true parallel operation of all (four) converters 3 is achieved.

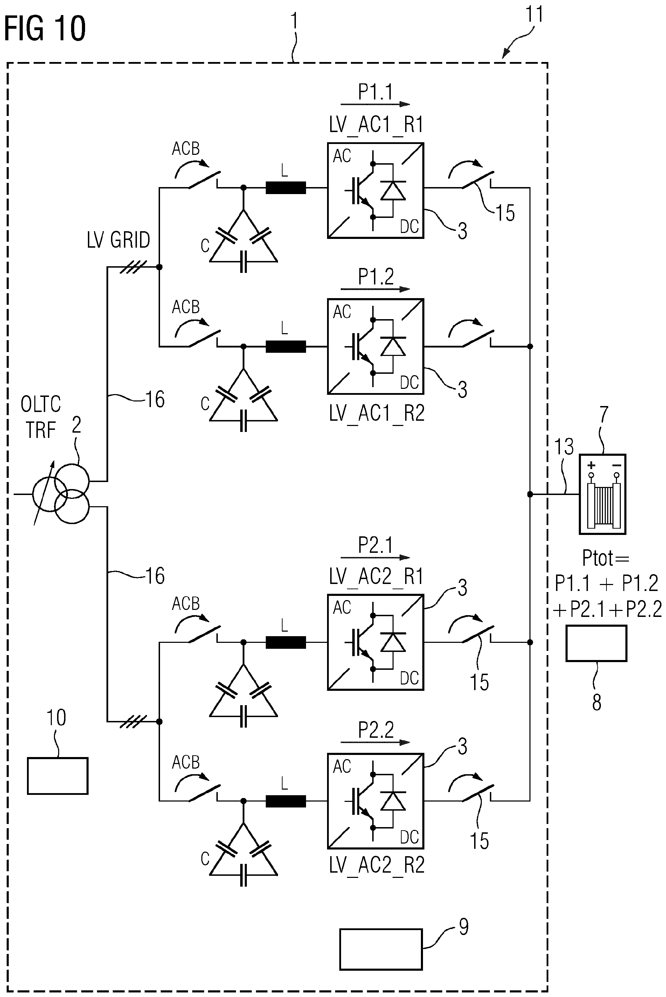

The situation is further described by way of Figure 10 showing that here, an electrical power Ptot = P1.1 + P1.2 + P2.1 + P2.2 is processed by the converters to the benefit of providing the electrolyzer system 11 with a high and stable power input.

It is apparent for a person skilled in the art that without loss of generality the principle can e.g. be applied to a number of further multiples of two parallelly connected converters.

With reference to Figure 10, a third step or phase of the present inventive method may be described following. The OLTC stays preferably in the same position as in the previously described step. Finally, full AFE operation between the minimum electrolyzer loading and full electrolyzer loading and power sharing among converters is attained meaning however not necessarily that an equal power distribution is selected.

Figure 7 further indicates how the current voltage characteristic of the electrolyzer 7 differs with respect to the states at a beginning of life BOL and an end of life EOL of the electrolyzer 7. At the end of life EOL, the electrolyzer 7 may require a higher voltage for the same current as depicted in Figure 7, where the minimum operating voltage of the electrolyzer 7 at the end of life EOL is higher than the minimum operating voltage at the beginning of life BOL.

The voltage difference to compensate between the beginning of life BOL and the end of life EOL may be indicated by means of an aging parameter, such as operating hours of the electrolyzer for instance. However, the operation and methodology of ramping up and down remain the same throughout the life of the electrolyzer 7 as schematically depicted in Figure 2 for the beginning of life BOL and the end of life EOL. Thus, the method is the same in both situations of beginning of life BOL and end of life EOL.

The only difference between the beginning of life BOL and end of life EOL of the electrolyzer 7 is that the change of the tap selection of the on-load tap changing transformer 2 may need to be performed differently.

As shown in Figure 7, the electrolyzer 7 requires an elevated amount of voltage Uₑ of the electrical power input at the end of life EOL as compared to the beginning of life BOL. This voltage difference can be compensated by adjusting the change of the tap selection corresponding to the aging parameter. Said change of the tap selection comprises replacing e.g. the selected first operating tap with another, e.g. a second operating tap, wherein the on-load tap changing transformer 2 is adapted to provide a higher voltage of the electrical power output 4 to the converter 3 preferably when the second tap is selected than when the first tap is selected. A difference between the taps might be determined based on the aging parameter.

Thus, age, wearing or a degradation status of the electrolyzer 7 can be compensated by altering the tap selection of the on-load tap changing transformer 2, particularly for reaching the respective tap changing voltage for the same operating current Iₒₚ corresponding to the aging parameter. Additionally, an operation of the converter 3, particularly a boost factor of the converter 3, may be adjusted for reaching the minimum operating voltage corresponding to the aging parameter.

The converter 3 is actually as well adapted to adjust the respective operating voltage at the beginning of life BOL and the operating voltage at the end of life EOL between the respective minimum operating voltage and maximum operating voltage Uₘₐₓ and/or between the polarization voltage U_{P} and the respective minimum operating voltage corresponding to the aging parameter and/or the respective current-voltage characteristic at the beginning of life BOL and end of live EOL.

Consequently, the on-load tap changing transformer 2 may be designed with an increased number of steps to meet the current-voltage characteristic of the electrolyzer 7 respectively at the beginning of life BOL and the end of life EOL.

After the (normal) operation phase of the system 11 indicated with N, another ramping a transient operation, namely a ramping down operation RD may follow, be it either due to a repair or maintenance requirement or due to the requirement of disconnecting the electrolyzer system from the energy source 5 for any reason. The ramp down procedure of the power supply is carried out reverse to the ramping up operation, including the different steps of the adjustments of the OLTC transformer 2 and the converter system 3 in the other way round.

During the transition phase as indicated with reference Q in Figure 7, given the inherent features of an IGBT converter, an exchange of reactive power Q might also be performed between the electrical power source 5 and the at least two line-commutated converters 3 of a given AC bus 16, and vice a versa.

During the ramp up and ramp down procedure the reactive power support towards the grid might be enabled in addition to the above-described IGBT functionality as well allowing the power supply to support the grid if requested by the overall controller or by the situation of the grid.

Evidently, however, grid support with reactive power functions could be applied during ramp up and down, like features which are required by the control architectures of the power converters since they are requested by grid operators, for example.

During ramping up and down the present power supply has possibly any such grid functions enabled. Based on the status of the converter loading, individual grid support function can hence be enabled or disabled.

The proposed inventive solution advantageously enables a safe and stable operation of the OLTC transformer with multiple converters connected to the same AC grid. As described above, multiple converters connected to the same low voltage AC grid might be required for large electrolysis plant in particular, due to the necessity to reduce footprint and to reduce filtering effort and equipment for a versatile and robust operation and grid connection of the electrolyzer plant.

The proposed solution particularly avoids the full parallel operation during the actual OLTC operation during ramping and therewith related disturbance created by the OLTC in a low voltage network.

The proposed state machine of the power supply does beneficially not bring any other additional costs to the power supply on the other hand.

Instead, once a true parallel operation of all involved converters is started, the OLTC transformer becomes quasi or effectively a simple 'fixed-winding' transformer if the operation is maintained between minimal loading and rated loading of the electrolyzer system as described above.

As a further advantage of the presented solution, power supply and/or electrolyzer operation remains stable and essentially in the same way reliable and predictable for BOL and EOL states. Likewise, operation philosophy remains the same for the different electrolyzer states, be it that the system is in a hot, warm or cold state.

The present solution thus overcomes the limitation of the previous solution available on the market and optimizes the connection and operation of industry-scale electrolyzers significantly.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Method for operating an electrolysis system comprising an electrolyzer (7) and an on-load tap changing transformer (2), particularly a medium to low voltage transformer (2), and at least two line-commutated converters (3), preferably IGBT converters, wherein the on-load tap changing transformer (2) receives an electrical power (4) from an electrical power source (5) and provides an electrical power output (4) to the line-commutated converters (3), wherein the at least two line-commutated converters (3) are electrically connected in parallel, between the on-load tap changing transformer (2) on an AC side and an electrolyzer (7) on a DC side, and convert the electrical power output (4) into an electrical power input (6) for the electrolyzer (7), wherein the at least two converters (3) are connected to the same transformer AC bus, the method comprising in a ramping phase of the electrolyzer (7, 100) adjusting a voltage (U_{E}) of the electrical power input (6) by means of only one of the parallelly connected converters (3) to a tap changing voltage (Uₜₐₚ), wherein the other parallelly connected converter is in a stand-by mode.

2. Method according to claim 1, wherein the ramping phase of the electrolyzer (7) extends between a polarization voltage (U_{P}) and a minimum operating voltage (Uₘᵢₙ) of the electrolyzer (7).

3. Method according to claim 1 or 2, wherein the ramping phase pertains to a ramp up and/or ramp down procedure of the electrolyzer (7).

4. Method according to one of the previous claims, comprising changing a tap selection of the on-load tap changing transformer (2) to a first operating tap, when the tap changing voltage (Uₜₐₚ) is reached, wherein the tap changing voltage (Uₜₐₚ) is higher than the minimum operating voltage (Uₘᵢₙ).

5. Method according to one of the previous claims, wherein the method comprises altering the tap selection, particularly to a second operating tap in accordance with an aging parameter (BOL, EOL) of the electrolyzer (7), wherein the second operating tap is selected at a second tap changing voltage (Uₜₐₚ).

6. Method according to one of the previous claims, comprising in a normal operation phase of the electrolyzer (7) adjusting the voltage of the electrical power input (6) by means of the self-commutated converter (3) between the tap changing voltage (Uₜₐₚ) and a rated operating voltage (U_{Op}) of the electrolyzer (7), wherein the rated operating voltage (U_{Op}) is higher than the tap changing voltage (Uₜₐₚ).

7. Method according to claim 6, wherein during the normal operation of the electrolyzer (7), the voltage (U_{E}) of the electrical power input (6) is adjusted by means of both of the at least two parallelly connected converters (3).

8. Method according to one of the previous claims, wherein the self-commutated converter (3) adjusts the voltage (U_{E}) of the electrical power input (6) corresponding to a current-voltage characteristic of the electrolyzer (7), particularly between the polarization voltage (U_{P}) and the tap changing voltage (Uₜₐₚ) and/or between the tap changing voltage (Uₜₐₚ) and a rated operating voltage (Uₒₚ).

9. Method according to one of the previous claims, wherein during the ramping phase of the electrolyzer (7), reactive power (Q) is exchanged between the electrical power source (5) and the at least two line-commutated converters (3), or vice versa.

10. Computer program comprising instructions which, when the program is executed by a controller, particularly by an electrolyzer controller (8) and/or a converter controller (9) and/or a tap changer controller (10), cause the controller to carry out the steps of the method of one of the previous claims.

11. Computer-readable storage medium having stored thereon the computer program of claim 10.

12. Controller, particularly an electrolyzer controller (8) and/or a converter controller (9) and/or a tap changer controller (10), comprising a computer-readable storage medium having stored thereon the computer program of claim 10 and optionally means to execute the method of one claims 1 to 9.

13. Power supply system (1) for a multi-stack electrolyzer system comprising the controller according to claim 12, being particularly suitable and adapted to perform the method according to one of claims 1 to 9, therefore comprising an on-load tap changing transformer (2), particularly a medium to low voltage transformer (2), and at least two line-commutated converters (3), preferably IGBT converters, wherein the on-load tap changing transformer (2) receives an electrical power (4) from an electrical power source (5) and provides an electrical power output (4) to the line-commutated converters (3), wherein the at least two line-commutated converters (3) are electrically connected in parallel to the on-load tap changing transformer (2) on a AC side and suitable to convert the electrical power output (4) into an electrical power input (6) for an electrolyzer (7), wherein the at least two converters (3) are connected to the same transformer AC bus.

14. Electrolysis system (11) with a plurality of electrolyzer stacks comprising the controller of claim 12 and/or the power supply system (1) of one of claims 13.
